Europäisches Patentamt

European Patent Office

Office européen des brevets

(19)

(11) Publication number: **0 236 594 B1**

# EUROPEAN PATENT SPECIFICATION

(45) Date of publication of patent specification: **15.05.91**  (51) Int. Cl.⁵: **H04N 1/40**

(21) Application number: **86202324.9**

(22) Date of filing: **18.12.86**

(54) Method of and device for recognizing half-tone image information.

(30) Priority: **24.12.85 NL 8503558**

(43) Date of publication of application:
**16.09.87 Bulletin 87/38**

(45) Publication of the grant of the patent:
**15.05.91 Bulletin 91/20**

(84) Designated Contracting States:
**DE FR GB NL**

(56) References cited:
**EP-A- 0 089 931**
**US-A- 4 194 221**

(73) Proprietor: **Océ-Nederland B.V.**
**St. Urbanusweg 43**
**NL-5914 CC Venlo(NL)**

(72) Inventor: **De Vogel, Robert**
**Tongelresestraat 65**
**NL-6513 DB Eindhoven(NL)**
Inventor: **Meekes, Lucas Johannes José Marie**
**Calslaan 2a-51**
**NL-7522 MA Enschedé(NL)**

(74) Representative: **Hanneman, Henri W.A.M.**
**Océ-Nederland B.V. Patents and Information**
**Postbus 101**
**NL-5900 MA Venlo(NL)**

## Description

This invention relates to a method of recognizing half-tone image information, the local frequency of which is within predetermined limits, within an information area that may also contain other kinds of image information, the image information area being scanned line by line to generate a video signal which is subjected to a recognition process to determine, for each part of the signal, whether the same belongs to half-tone image information.

In the reproduction of an original image, on the basis of image data available in the form of a video signal or a series of pixels obtained by line by line scanning of the original, e.g. by means of a video camera, an array of charge-coupled elements, and the like, the type of original image must be taken into account because if the original image consists wholly of partly of a half-tone image disturbing patterns may occur in the reproduction depending upon the reproduction method used.

With regard to image information a distinction may be made between the following:

a) Text: in this there is a substantailly regular distribution of grey level flanks the distance between which differs according to the text in question, but is generally in the order of 3 mm;

b) Line drawings: these have steep grey level flanks with an irregular rather than regular distribution, the distance of which flanks may be less than in the case of text, in the order of 0.5 mm;

c) Continuous tone images (photographs): the grey levels usually vary slowly and gradually, so the flanks here are less steep with no regular distribution;

d) Half-tone images or dither images: these frequently have a regular pattern of grey level peaks with slowly varying peak height. The local frequency at which these peaks occur is high and the distance between the peaks is therefore relatively low, in the order of a few tenths of a millimetre.

When an image is reproduced by means of a dither process, moiré patterns may occur at the places where half-tone image information is present in the image and this is very undesirable. On the other hand, by means of special reproduction techniques known per se and intended more particularly for the processing of half-tone image information, it is possible to avoid the formation of such disturbing patterns. In order that the image information offered may be processed during the reproduction process in the correct way according to the type of image information, it is necessary to know what part of a complete information area contains half-tone image information. There is therefore a need for a method by means of which a distinction can be made between half-tone image information and other types of image information.

A method of this kind and a device intended for the purpose is already described in US patent US-A-4 194 221. The video signal originating from an image scanner and available in the form of a series of pixels at the output of the CCD scanner described as an example is temporarily stored in a shift register and also subjected to an auto-correlation process in which an auto-correlation function is calculated in each case for a predetermined number of successive pixels. In this function the peak values are detected and finally the distances between these peak values are determined. If these distances are less than a predetermined threshold value or, in other words, if the frequency of the auto-correlation function is higher than a specific threshold value, the decision is taken that the relevant number of pixels represents high-frequency half-tone image data.

This known device has a number of disadvantages. Calculating the auto-correlation function for each of a series of pixels, detection of the peak values therein, and determination of the distances between these peak values, is relatively time-consuming and requries a considerable memory capacity in the device with which the method is performed. Thus a considerable amount of time is required to process all the information of the original image and this means that scanning of the original must take place relatively slowly or, if the original is scanned quickly, a large memory is required to be able to store the video signal or the generated series of pixels repectively at least temporarily.

The object of the invention is to provide a method which is simpler than the known method, requires less complex calculations and can be at least approximately performed in real time even with fast scanning of the original. The invention also has the object of providing a device for performing a method of this kind without the need for large capacity memories and which can be implemented with relatively simple means both in the form of a special hardware circuit and in the form of a microprocessor with peripheral circuits, which is programmed appropriately.

According to the invention this object is attained in a method and a device as set out in the claims 1 and 10, respectively to which reference should now be made.

The invention will be explained hereinafter with reference to exemplified embodiments illustrated in the drawings.

Fig. 1 represents a general block-diagram of a device for scanning an original image and processing the resulting image information.

Figs. 2, 3 and 4 illustrate various processing methods.

Fig. 5 illustrates a device for processing image information originating from a scanner or camera.

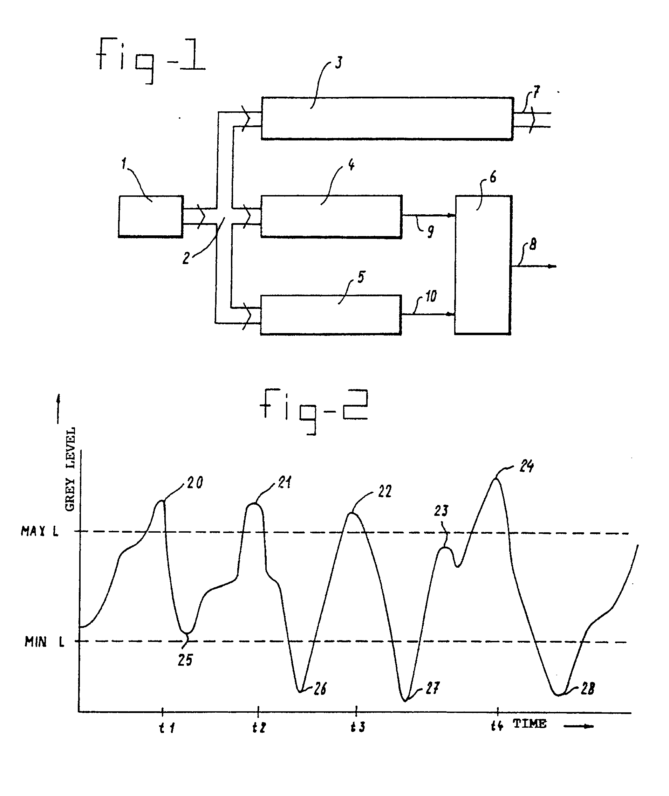

Fig. 1 represents a device in which the invention can be applied. This device is provided with a scanning unit or image scanner with which the original image is scanned, for example, with 20 pixels per mm and 256 grey levels per pixel. Instead of an image scanner of this kind it is, of course, possible to use a video camera or the like. The series of pixels or the analog video signal delivered by the scanner 1 is fed via the data link 2 first to a shift register or delay unit 3 used to delay the incoming signal over a specific period of time. The delayed signal is delivered at the output of shift register 3 to the data link 7.

Secondly, the video signal is fed to a half-tone image information detector 4, in which the incoming signals are processed to determine whether at least parts of the incoming signals relate to half-tone image portions.

The generated signals are also fed if required to a further detector 5 in which a detection can be carried out if required on signal parts originating from those parts in the original image which contain text, line drawings or continuous tone images (photographs). This detector 5 also delivers at its output a decision with which signal parts are characterised as belonging to one of the said types of image. If only detector 4 is used, then the decision ouput signal on line 9, with which therefore an indication is given only whether a certain signal part does or does not belong to a half-tone image part, forms the characteristic that is added to the associated part of the signals on the data link 7. If detector 5 or any further detectors are also used, then the output signals of the various detectors, in this case the detectors 4 and 5, are fed via the outputs 9 and 10 preferably to a comparator 6 with which the output signals are compared in order to avoid any non-clarity in the output signals delivered by the detectors. A code by means of which a given signal part is clearly characterised is then delivered via the ouput 8.

The invention relates particularly to the half-tone image dectector or dither detector 4 and its operation. A number of methods according to the invention will be explained hereinafter with reference to Figs. 2, 3 and 4.

In the usual printing units or reproduction units with which dithered images or half-tone images are produced, dither cells are used with dimensions varying between $200 \times 200 \ \mu m$ and $400 \times 400 \ \mu m$. This means that the number of image cells per mm varies between about $2\frac{1}{2}$ and about 5. The dither detector 4 is intended particularly to recognize this form of dither.

If an image is scanned with a very fine-scanning scanner, e.g. a scanner 1 scanning with 20 pixels per mm, then scanning of a dithered image part will produce a signal in which a fairly regular pattern of grey level peaks is present the peak height of which varies only slowly. Examples of such signals are given in Figs. 2, 3 and 4.

According to the invention, the dither detector 4 first of all determines where the grey level maxima are situated in the incoming signal, on the basis of the condition that each grey level maximum must lie at least above a predetermined high threshold value. In the input signal represented in Fig. 2, the high threshold value is defined by the level MAXL and it will be seen from the Figure that the peaks 20, 21, 22, 24 rise above this grey level MAXL. The maximum 23, however, does not rise above the level MAXL and thus does not satisfy the condition. As soon as a grey level maximum is found above the level MAXL, its time is detected and then the time elapsing until the next grey level maximum occurs is determined. The period elapsing until the next maximum is related to the distance between the two maxima. In Fig. 2 the distance between the maxima 20 and 21 is defined by $(t2 - t1)$. The distance between the two maxima 22 and 21 is defined by $(t3 - t2)$ etc.

Each time a distance has been determined, that distance is compared with a predetermined fixed distance T related to the local frequency of the half-tone image information or dither information. If the difference between the fixed distance and the determined distance $(t2 - t1)$ lies within predetermined limits, the decision is taken in respect of the signal part between the peak 20 and the peak 21 that this signal part belongs to a half-tone image part. If, however, the distance does not satisty these conditions, the decision is taken that no half-tone image information is involved in this case.

Although this method of itself already gives very usable results, a number of improvements have been found possible. A first improvement was obtained by comparing the determined distance not only with the fixed distance T but also with the directly preceding determined distance. This means that a test is carried out not only to see whether

$$|T - (t3 - t2)| < tg1$$

where tg1 indicates a predetermined margin, but also to see whether

$$|(t2 - t1) - (t3 - t2)| < tg2$$

where tg2 is another predetermined margin which can be determined arbitrarily.

A further improvement in the results was obtained by subjecting the grey level maxima to another condition, i.e. that a next maximum cannot be determined unless, after the determination of a maximum, the grey level in the video signal has fallen at least once below a predetermined low threshold value. This low threshold value is indicated by MINL in Fig. 2. As will be seen from Fig. 2, under this condition the grey level maximum 21 is no longer considered in the calculation since although the maximum 20 is followed by a minimum 25 this minimum is not situated below the level MINL. Only after minimum 26 occurs a new maximum 22 is found which satifies all the conditions. In this preferred embodiment of the method, therefore, only the maxima 20, 22 and 24 in Fig. 2 are taken into account.

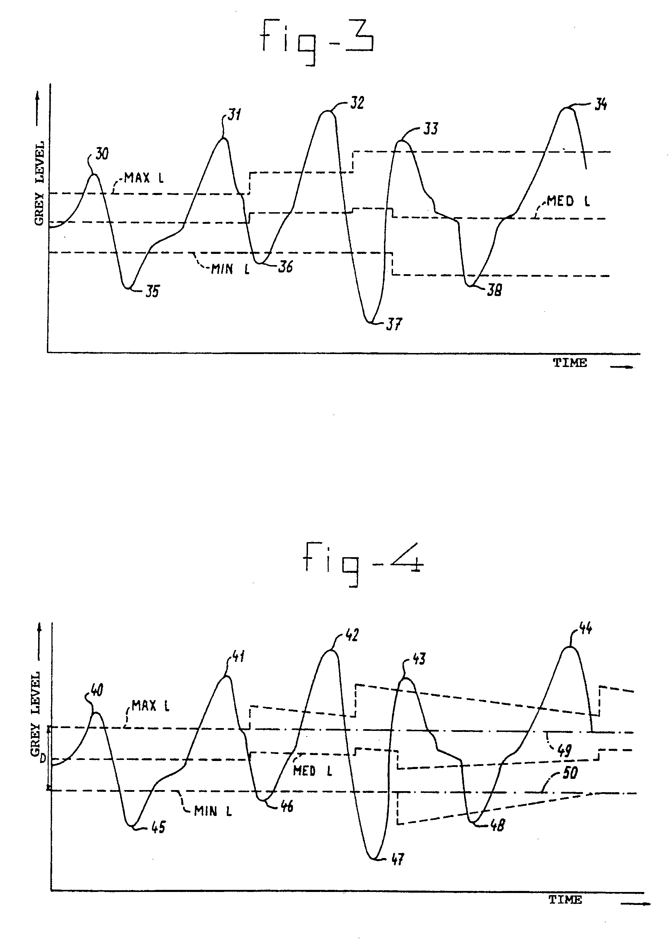

Fig. 3 illustrates another development of the method according to the invention. In this embodiment, a relatively low threshold value MAXL and a relatively high threshold value MINL are initially taken as basis. Then, at each grey level maximum and each grey level minimum respectively higher and lower than the instantaneous associated threshold value, the magnitude of the difference between the maximum or minimum and the associated threshold value is determined. A reference level is then calculated which is equal to the lowest grey level minimum encountered until then plus a predetermined percentage of the detected difference between the highest grey level maximum encountered until then and the lowest grey level minimum encountered until then. If the threshold value MAXL is below this reference level, the threshold value MAXL is raised to that reference level.

A similar procedure can be applied for determining the threshold value MINL. A reference level is calculated which is equal to the lowest grey level minimum encountered until then plus a predetermined percentage of the determined difference between the highest grey level maximum encountered until then and the lowest grey level minimum encountered until then. If the treshold value MINL is above this reference level, the threshold value MINL is lowered to that reference level.

Fig. 3 is based on arbitrarily chosen threshold values MAXL and MINL. After the occurrence of the first maximum 30 and the first minimum 35, the above calculation can be carried out which, in this case, has the result that the threshold values have been correctly selected and hence are not changed after the occurence of the minimum 35. On the next higher grey level maximum 31, however, this calculation carried out with the amplitude values of the maxima 31 and 30 teaches that the threshold value MAXL is below the calculated level and hence, as shown in Fig. 3, the level of MAXL is raised to the calculated percentage. In the Figure, a certain time has intentionally been kept on between the occurrence of the maximum 31 and the increase of the threshold value MAXL, such time being neccessary to perform the required calculation. It will, however, be clear that this time can be a short time.

On the next grey level maximum 32 which is higher than the highest maximum 31 encountered until then, it is also apparent that the threshold value MAXL then obtaining is below the then calculated percentage and consequently, again after a certain delay period, the threshold value MAXL is again adjusted to the calculated percentage. On the next following maximum 33, no further change takes place, and the same applies to the next maximum 34, because at both maxima the threshold value MAXL is above the calculated percentage.

A similar procedure is applied in respect of the low threshold value MINL. After the maximum 30 and minimum 35 have occurred, the said percentage is calculated as indicated already hereinbefore and it is apparent from this that in the first instance the threshold value MINL has been correctly chosen. This threshold value is therefore not changed. After the occurrence of the minimum 36 no change takes place either. On the occurrence of the minimum 37, however, the level MINL proves to be too high. The last calculation based on the maximum 32 and the minimum 37 shows that the threshold value MINL has to be reduced. This reduction in turn takes place after a certain delay period necessary for performing the required calculations. At the following minimum 38 the level MINL remains unchanged.

With this embodiment of the invention the two threshold values are self-adjusting. It has been found that reliable decisions can be taken in step c) of the method according to the invention with similar self-adjusting grey levels.

It will be apparent when the method described with reference to Fig. 3 is used centring of the levels MAXL and MINL is obtained around an average grey level which can be regarded as the 50% level, the 0% level being determined by the lowest minimum detected until then and the 100% level being determined by the highest maximum detected until then. Another embodiment of the method according to the invention is now based on this average grey level, which is denoted by MEDL in Fig. 3. This level MEDL will be adjusted at the same times as those at which the levels MAXL and MINL were adjusted in Fig. 3. After some time the level MEDL will have adjusted itself to the value corresponding to 50%. The associated high threshold value MAXL can then be selected, for example, at 80% and the low threshold value MINL will then come to lie at 20%.

Yet another embodiment of the reliability of the method according to the invention is obtained in an embodiment whose effect is illustrated in Fig. 4. In this embodiment, just as in Fig. 3, the high threshold value MAXL is initially set at a value indicated by the dot-dash line 49 and the low threshold value MINL is initially set at a value indicated by the dot-dash line 50. The levels indicated by the lines 49 and 50 are preferably selected at a predetemined distance D, care being taken hereinafter to ensure that the high and low threshold values always differ from one another at least by D. In the same way as in the embodiment of Fig. 3, if the high threshold value MAXL is found to be below the calculated percentage the threshold value is adjusted. After detection of the maximum 41, therefore, the level of MAXL is increased to the calculated percentage. Thereafter, however, the value of MAXL does not remain constantly at the new value as in Fig. 3, but returns at a given speed to the level indicated by the line 49. On the occurrence of the grey level maximum 42 it is again found that the high threshold value is in fact too low and this threshold value is again adjusted by an increase to the predetermined percentage. Once again, however, there is a gradual drop from the high threshold value at a predetermined speed.

A similar process takes place in the case of the low threshold value MINL. At the first two minima, 45 and 46, no threshold value change is carried out. At the minimum 47, however, the threshold value MINL proves to be too high and this value is reduced to the calculated percentage. Thereafter, however, the threshold value will increase with a certain speed to the level indicated by the dot-dash line 50.

An average level denoted by MEDL in Fig. 4 can also be taken as a basis in this embodiment. At the same times as those at which adjustment takes place of the high threshold value and the low threshold value in Fig. 4 a corresponding adjustment will also take place of the level MEDL. The high threshold value and the low threshold value can now again be set as a percentage of this average level MEDL.

Because the original image is scanned line by line, the transitions in the line direction between half-tone image information and other kinds of image information are determined for each line. In the column direction, however, there has until now been no consideration of the transitions between half-tone image information and other kinds of image information. It may generally be assumed that a specific type of information in an original image will occur in a more or less regular structure, e.g. in rectangular blocks. (An example is an original which is partially provided with printed text and partially with photographs which will generally have a rectangular closed shape). It is therebefore advantageous to compare with one another the decisions taken for adjacent lines in order thus to exclude any illogical decisions. Preferably, the procedure in this case is such that a recognition decision for a following adjacent scanning line is maintained if the recognition decisions for the corresponding part of the previous line is identical. If, however, the decision for the corresponding part of the previous line is not identical, the decision for the current line is changed to "not unambiguously recognizable". If the decision for the previous line is "not unambiguously recognizable" the decision for the current line is considered correct and not changed.

The advantage of this method is that no unclear situations arise at the transition between one type of image information and the other type of image information. Although the decision "not unambiguously recognizable" is taken for a scanning line situated exactly at the transition between one type of information and the other type, so that the information on that line might, as it were, be lost, the information which clearly - belongs to a given image type is unambiguously recognized at such.

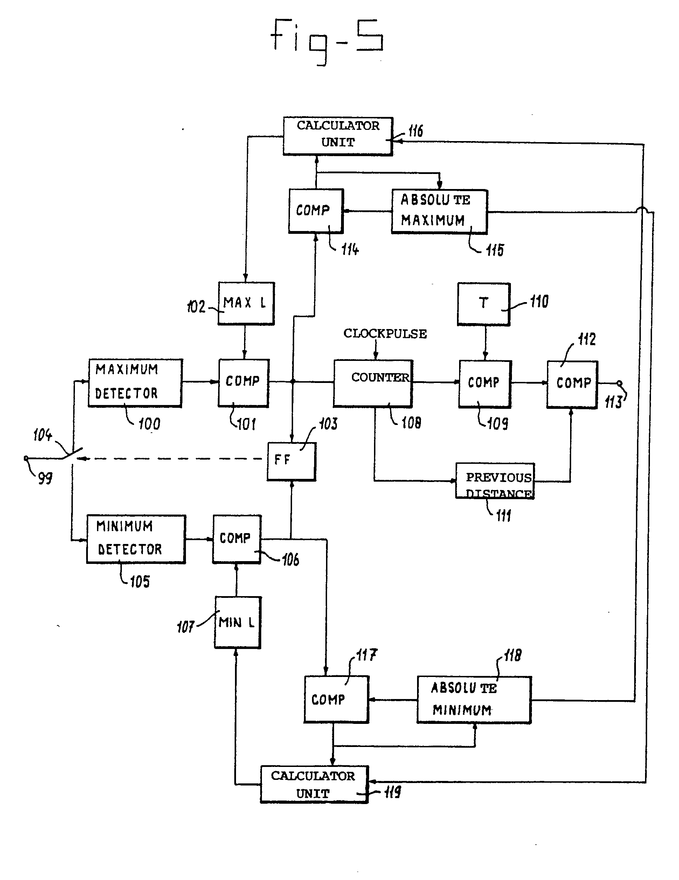

Fig. 5 represents a block-diagram of a circuit with which a method according to the invention can be performed. The incoming signals are fed from input 99 via switch 104 to the maximum detector 100 or the minimum detector 105. In the position illustrated for the switch 104, the signals are fed to the maximum detector 100, in which a maximum value is determined each time in the incoming flow of grey values. As soon as a maximum has been found, it is compared in comparator 101 with the level of the high threshold value fixed in a register or memory 102. If the found maximum is greater than the level of the high threshold value MAXL, the comparator 101 delivers a signal to the flip-flop 103 which ensures (via the dashed control line) that the switch 104 is changed over to the other position. From then on, the incoming signals are thus fed to the minimum detector 105 in which the minima in the signals are determined. If a minimum value is found, that value is compared in comparator 106 with the low threshold value MINL which is provided in the memory or register 107. If the found minimum is lower than MINL, the comparator 106 delivers a signal to the flip-flop 103 which in response again changes over the switch 104 via the control line to the position shown in Fig. 5.

The part of the circuit described until now, therefore, detects the maxima in the incoming signals which lie above a predetermined high threshold value MAXL and which also occur after a minimum value lower than a low threshold value MINL has occured in the signals.

On the occurrence of a maximum which satisfies all the requirements, the comparator 101 will deliver a signal to the counter 108, the contents of which varies continuously in response to the clock pulses fed to it. The counter 108 will stop as a result of the signal from the comparator 101. The maximum contents reached is compared in comparator 109 with a predetermined period T in the memory or register 110. Also, the contents reached in the counter 108 is transmitted to a memory or register 111 whereinafter the counter 108 is reset to restart counting. If the comparator 109 detects that the contents reached in the counter 108 is within predetermined limits around the fixed value T, the contents is transmitted to the comparator 112 in wich it is compared with the previous contents. If the difference between the two contents also lies within predetermined limits, the comparator 112 will deliver the positive decision signal to the output 113.

A circuit with the components described until now operates with fixed high and low threshold values MAXL and MINL respectively. As described hereinbefore, it is preferable to work with varying threshold values. In one of the embodiments described the threshold values were made dependent upon the absolute maximum and minimum grey levels found in the preceding signal. The circuits for performing an embodiment of this kind are also represented in Fig. 5. Whenever a new maximum is found which satifies all the requirements, this maximum is fed by comparator 101 (or directly from maximum detector 100 under the control of the comparator 101) to a comparator 114 in which this maximum is compared with the absolute maximum grey level stored in a register or memory 115. If the maximum found is smaller than the absolute maximum, the comparator does not deliver an output signal and no further action takes place. If, however, the maximum found is greater than the absolute maximum stored in register 115, the new maximum found is stored in register 115 instead of the previous value and the new absolute maximum is also fed to the calculator unit 116, in which, starting from the new absolute maximum found and the absolute minimum stored in register 118, a new high threshold value MAXL is calculated. This new high threshold value is then fed into the register 102 instead of the value present therein.

A similar operation takes place on the low threshold value side. As soon as the comparator 106 has found a minimum below the minimum level MINL, this minimum will be fed by the comparator 106 (or by the minimum detector 105 under the control of the comparator 106) to a comparator 117 in which the minimum found is compared with the absolute minimum stored in a register or memory 118. If the minimum found is higher than the absolute minimum, no further action takes place, if, however, the minimum found is lower than the absolute minimum, the minimum found is stored in the register 118 instead of the value present therein before and also the minimum found which is now equal to the absolute minimum is fed to the calculator unit 119 in which, on the basis of this new value and the absolute maximum from the register 115, a new low threshold level MINL is calculated which is fed from the unit 119 into the memory or register 107.

A method of the type illustrated in Fig. 4 could be embodied by means of the circuit shown in Fig. 5 by arranging for the calculator unit 116 or 119 to calculate a new threshold value at fixed intervals, the new threshold value being reduced (in the case of the high threshold value) or increased (in the case of the low threshold value) with respect to the preceding threshold value by a predetermined factor (a predetermined speed). The change of the threshold value is continued until a predetermined limit is reached, which is indicated by the dot-dash line 49 and 50 respectively in Fig. 4.

Although Fig. 5 shows a large number of separate units, it will be apparent that various units can be combined in a practical embodiment. Thus the person skilled in the art will find no problems in replacing the calculator units 116 and 119, the comparators 114 and 117, the registers 115 and 118, and the registers 102 and 107 by a single calculator unit combined with a suitable register or memory.

It is also possible to embody at least a large part of the necessary hardware in the form of a suitably programmed computer.

**Claims**

1. A method of recognizing half-tone image information having a local frequency within predetermined limits such that an information area which may also contain other kinds of image information is scanned line by line to generate a signal which is subjected to a recognition process to determine, for each part of the signal, whether that part of the signal contains said half-tone image information comprising the steps of:

    a) successively identifying by comparison a plurality of grey level maxima in the signal which are above a predetermined high threshold value;

    b) measuring the distance between successive grey level maxima found in step (a) and comparing the measured distance with a predetermined fixed distance; and

c) deciding for each part of the signal between each successive grey level maxima found in step (a), that it contains said half-tone image information if the comparison made in step (b) lies within a first predetermined limit.

2. The method as described in Claim 1, wherein step (b) comprises the additional step of comparing the measured distance for each part of the signal between each successive grey level maxima with a previously measured distance for that part of the signal between the two immediately preceeding grey level maxima and wherein step (c) comprises the additional step of deciding for each part of the signal between each successive grey level maxima that it contains said half-tone image information if the comparison made in step (b) between the measured distance and the previously measured distance lies within a second pretermined limit.

3. The method as described in Claim 1 or 2 wherein a grey level maximum can be identified in step (a) only if the signal has fallen at least once below a pretermined low threshold value since the identification of an immediately preceeding grey level maximum.

4. The method as described in any of the preceeding Claims wherein the predetermined high threshold value can vary and is determined from a part of the signal previously processed and wherein a new predetermined high threshold value is calculated from a last lowest grey level minimum plus a predetermined percentage of the difference between a last highest grey level maximum and the last lowest grey level minimum.

5. The method as described in any of the preceeding Claims wherein the predetermined low threshold value can vary and is determined from a part of the signal previously processed and wherein a new predetermined low threshold value is calculated from a last lowest grey level minimum plus a predetermined percentage of the difference between a last highest grey level maximum and the last lowest grey level minimum.

6. The method as described in Claim 4 wherein after the new pretermined high threshold value is calculated, the new predetermined high threshold value is reduced at a predetermined speed.

7. The method as described in Claim 5 wherein after the new predetermined low threshold value is calculated, the new predetermined low threshold value is increased at a predetermined speed.

8. The method as described in Claim 6 wherein a predetermined minimum difference is maintained between the new predetermined high threshold level and the new predetermined low threshold level.

9. The method as described in Claim 7 wherein a predetermined minimum difference is maintained between the new predetermined high threshold level and the new predetermined low threshold level.

10. A device for recognizing half-tone image information having a local frequency within predetermined limits such that an information area which may also contain other kinds of image information is scanned line by line by a scanning means to generate a signal which is subjected to a recoginition process in a recognition unit to determine, for a each part of the signal, whether the part of the signal belongs to said half-tone image information, characterised in that, the recognition unit comprises: a maximum detector by means of which maxima in the signal are determined; a first comparator connected to the maximum detector wherein each detected maximum is compared with a high threshold value stored in a first memory; a counter controlled by clock pulses at a fixed frequency which on the detection in the first comparator of a maximum above the high threshold value registers the contents therein; a second comparator connected to the counter for comparing the registered contents of the counter with a fixed value stored in a second memory and delivering an output signal to the output of the recognition unit if the registered contents of the counter lie within a predetermined area around the reference value.

11. A device as described in Claim 10, wherein the registered contents of the counter are stored in a third memory and if the second comparator delivers said output signal, the registered contents of the counter are compared in a third comparator with the previously registered contents stored in the third memory, the third comparator delivering an output signal to the output of the recognition unit if the difference between the registered contents of the counter and the previously registered contents stored in the third memory is within predetermined limits.

12. A device as described in Claim 10 wherein the recognition unit further comprises: a minimum detector by means of which minima in the signal are determined; a fourth comparator connected to the minimum detector wherein each minimum is compared with a low threshold value stored in a fourth memory; a flip-flop which is activated by the fourth comparator and the first comparator on the occurrence of a minimum below of the threshold value to bring the flip-flop into a first position wherein the flip-flop provides a connection between the input of the recognition unit and the maximum detector; and wherein on the occurrence of a maximum above the level of the high threshold value, the first comparator activates the flip-flop to bring it into a second position wherein the flip-flop establishes a connection between the input of the recognition unit and the minimum detector.

13. A device as described in any one of the claims 10-12 wherein the recognition unit further comprises a fifth comparator connected to the first comparator for comparing the maximum above the high threshold value as determined by the first comparator with an absolute maximum value stored in a fifth memory, which said fifth comparator on the maximum above the high threshold value being above the absolute maximum value feeds the maximum above the high threshold values to the fifth memory to replace the absolute maximum value therein with a new absolute maximum value and also feeds the new absolute maximum value to a calculator unit wherein a new high threshold value is calculated which is then stored in the first memory.

14. A device as described in any of the claims 10-13 wherein the recognition unit further comprises a sixth comparator connected to the fourth comparator for comparing the minimum below the low threshold value as determined by the fourth comparator with an absolute minimum value stored in a sixth memory, which said sixth comparator on the minimum below the low threshold value being below the absolute minimum value feeds the minimum below the low threshold value to the sixth memory in order to replace the absolute minimum value therein with a new absolute minimum value and also feeds the new absolute minimum value to a second calculator unit wherein a new low threshold value is calculated which is then stored in the fourth memory.

## Revendications

1. Procédé de reconnaissance d'informations d'images en demi-ton ayant une fréquence locale dans des limites prédéterminées de manière qu'une zone d'informations qui peut également contenir d'autres types d'informations d'images soit explorée ligne par ligne pour produire un signal qui est soumis à un processus de reconnaissance afin de déterminer, pour chaque partie du signal, si la partie du signal contient des informations d'images en demi-ton, procédé consistant :

   a) à identifier successivement par comparaison plusieurs valeurs maximales du niveau de gris dans le signal qui sont supérieures à une valeur seuil supérieure prédéterminée ;

   b) à mesurer la distance entre des valeurs maximales successives du niveau de gris trouvées dans la phase (a) et à comparer la distance mesurée avec une distance fixe prédéterminée; et

   c) à décider, pour chaque partie du signal entre chaque valeur maximale successive du niveau de gris trouvée dans la phase (a) qu'elle contient lesdites informations d'images en demi-ton si la comparaison effectuée à la phase (b) se situe à l'intérieur d'une première limite prédéterminée.

2. Procédé selon la revendication 1, dans lequel la phase (b) consiste en outre à comparer la distance mesurée pour chaque partie du signal entre chaque valeur maximale successive du niveau de gris avec une distance mesurée précédemment pour cette partie du signal entre les deux valeurs maximales immédiatement précédentes du niveau de gris et dans lequel la phase (c) consiste en outre à décider pour chaque partie du signal entre des valeurs maximales successives du niveau de gris qu'elle contient lesdites informations d'images en demi-ton si la comparaison faite à la phase (b) entre la distance mesurée et la distance mesurée précédemment se situe à l'intérieur d'une seconde limite prédéterminée.

3. Procédé selon la revendication 1 ou 2, dans lequel une valeur maximale du niveau de gris peut être identifiée à la phase (a) seulement si le signal a diminué au moins une fois au-dessous d'une valeur seuil inférieure prédéterminée depuis l'identification d'une valeur maximale précédent immédiatement du niveau de gris.

4. Procédé selon l'une quelconque des revendications précédentes, dans lequel la valeur seuil supérieure prédéterminée peut varier et est déterminée à partir d'une partie du signal précédemment traité et dans lequel une nouvelle valeur seuil supérieure prédéterminée est calculée à partir d'une dernière valeur minimale la plus basse du niveau de gris augmentée d'un pourcentage prédéterminé de la différence entre une dernière valeur maximale la plus haute du niveau de gris et la dernière valeur minimale la plus basse du niveau de gris.

5. Procédé selon l'une quelconque des revendications précédentes, dans lequel la valeur seuil inférieure prédéterminée peut varier et est déterminée à partir d'une partie du signal précédemment traité et dans lequel une nouvelle valeur seuil inférieure prédéterminée est calculée à partir d'une dernière valeur minimale la plus basse du niveau de gris augmentée d'un pourcentage prédéterminé de la différence entre une dernière valeur maximale la plus haute du niveau de gris et la dernière valeur minimale la plus basse du niveau de gris.

6. Procédé selon la revendication 4, dans lequel après que la nouvelle valeur seuil supérieure prédéterminée à été calculée, la nouvelle valeur seuil supérieure prédéterminée est réduite à une vitesse prédéterminée.

7. Procédé selon la revendication 5, dans lequel après que la nouvelle valeur seuil inférieure prédéterminée a été calculée, la nouvelle valeur seuil inférieure prédéterminée est augmentée à une vitesse prédéterminée.

8. Procédé selon la revendication 6, dans lequel une différence minimale prédéterminée est maintenue entre le nouveau niveau seuil supérieur prédéterminé et le nouveau niveau seuil inférieur prédéterminé.

9. Procédé selon la revendication 7, dans lequel une différence minimale prédéterminée est maintenue entre le nouveau niveau seuil supérieur prédéterminé et le nouveau niveau seuil inférieur prédéterminé.

10. Dispositif de reconnaissance d'informations d'images en demi-ton ayant une fréquence locale dans des limites prédéterminées de manière qu'une zone d'informations qui peut également contenir d'autres types d'informations d'images soit explorée ligne par ligne par des moyens d'analyse de manière à produire un signal qui est soumis à un processus de reconnaissance dans une unité de reconnaissance pour déterminer, pour chaque partie du signal, si la partie du signal appartient auxdites informations d'images en demi-ton caractérisé en ce que l'unité de reconnaissance comporte : un détecteur de valeur maximale au moyen duquel des valeurs maximales dans le signal sont déterminées ; un premier comparateur connecté au détecteur de valeur maximale dans lequel chaque valeur maximale détectée est comparée avec une valeur seuil supérieure mémorisée dans une première mémoire ; un compteur commandé par des impulsions d'horloge a une fréquence fixe qui, à la détection par le premier comparateur d'une valeur maximale supérieure à la valeur seuil supérieure enregistre son contenu ; un second comparateur connecté au compteur pour comparer le contenu enregistré du compteur avec une valeur fixe mémorisée dans une seconde mémoire et délivrant un signal de sortie à la sortie de l'unité de reconnaissance si le contenu enregistré du compteur se situe dans une zone prédéterminée autour de la valeur de référence.

11. Dispositif selon la revendication 10, dans lequel le contenu enregistré du compteur est mémorisé dans une troisième mémoire et, si le second comparateur délivre ledit signal de sortie, le contenu enregistré du compteur est comparé dans un troisième comparateur avec le contenu précédemment enregistré dans la troisième mémoire, le troisième comparateur délivrant un signal de sortie à la sortie de l'unité de reconnaissance si la différence entre le contenu enregistré du compteur et le contenu précédemment enregistré, mémorisé dans la troisième mémoire, se situe dans des limites prédéterminées.

12. Dispositif selon la revendication 10, dans lequel l'unité de reconnaissance comporte en outre: un détecteur de valeur minimale au moyen duquel des valeurs minimales dans le signal sont déterminées ; un quatrième comparateur connecté au détecteur de valeur minimale, dans lequel chaque valeur minimale est comparée avec une valeur seuil inférieure mémorisée dans une quatrième mémoire ; un circuit bistable qui est activé par le quatrième comparateur et le premier comparateur à l'apparition d'une valeur minimale au-dessous de la valeur seuil pour amener le circuit bistable dans une première position dans laquelle le circuit bistable établit une connexion entre l'entrée de l'unité de reconnaissance et le détecteur de valeur maximale ; et dans laquelle, à l'apparition d'une valeur maximale au-dessus du niveau de la valeur seuil supérieure, le premier comparateur active le circuit bistable pour l'amener dans une seconde position dans laquelle le circuit bistable établit une connexion entre l'entrée de l'unité de reconnaissance et le détecteur de valeur minimale.

13. Dispositif selon l'une quelconque des revendications 10 à 12, dans lequel l'unité de reconnaissance comporte en outre un cinquième comparateur connecté au premier comparateur pour comparer la valeur maximale au-dessus de la valeur seuil supérieure, déterminée par le premier comparateur avec une valeur maximale absolue mémorisée dans une cinquième mémoire, ledit cinquième comparateur, à l'apparition d'une valeur maximale au-dessus de la valeur seuil supérieure au-dessus de la valeur maximale absolue, applique la valeur maximale au-dessus des valeurs seuil supérieures à la cinquième mémoire afin d'y remplacer la valeur maximale absolue par une nouvelle valeur maximale absolue et fournit également la nouvelle valeur maximale absolue à une unité de calculateur dans laquelle une nouvelle valeur seuil supérieure est calculée, valeur ensuite mémorisée dans la première mémoire.

14. Dispositif selon l'une quelconque des revendications 10 à 13, dans lequel l'unité de reconnaissance comporte en outre un sixième comparateur connecté au quatrième comparateur pour comparer la valeur minimale inférieure à la valeur seuil inférieure, déterminée par le quatrième comparateur, avec une valeur minimale absolue mémorisée dans une sixième mémoire, ledit sixième comparateur, à l'apparition d'une valeur minimale au-dessous de la valeur seuil inférieure au-dessous de la valeur minimale absolue, fournit la valeur minimale inférieure à la valeur seuil inférieure à la sixième mémoire pour y remplacer la valeur minimale absolue par une nouvelle valeur minimale absolue et fournit également la nouvelle valeur minimale absolue à une seconde unité de calculateur dans laquelle une nouvelle valeur seuil inférieure est calculée, valeur ensuite mémorisée dans la quatrième mémoire.

**Ansprüche**

1. Verfahren zur Erkennung von Halbtonbildinformation, die eine Raumfrequenz innerhalb vorgegebener Grenzen aufweist, derart, daß ein Informationsgebiet, das auch andere Arten von Bildinformation enthalten kann, zeilenweise abgetastet wird, um ein Signal zu erzeugen, das einem Erkennungsprozeß unterzogen wird, um für jeden Teil des Signals zu entscheiden, ob dieser Teil des Signals die Halbtonbildinformation enthält, mit den folgenden Schritten:

a) Aufeinanderfolgendes Identifizieren einer Vielzahl von Grauwert-Maxima in dem Signal, die oberhalb eines vorgegebenen hohen Schwellenwertes liegen, durch Vergleich,

b) Messen der Distanz zwischen den in Schritt a) gefundenen aufeinanderfolgenden Grauwert-Maxima und Vergleichen der gemessenen Distanz mit einer vorgegebenen festen Distanz und

c) Entscheiden für jeden Teil des Signals zwischen jedem der in Schritt a) gefundenen aufeinanderfolgenden Grauwert-Maxima, daß er die Halbtonbildinformation enthält, wenn das Vergleichsergebnis von Schritt b) innerhalb einer ersten vorgegebenen Grenze liegt.

2. Verfahren nach Anspruch 1, bei dem der Schritt b) den zusätzlichen Schritt enthält, daß die gemessene Distanz für jeden Teil des Signals zwischen den aufeinanderfolgenden Grauwert-Maxima mit einer zuvor für diesen Teil des Signals gemessenen Distanz zwischen den zwei unmittelbar vorangehenden Grauwert-Maxima verglichen wird, und bei dem der Schritt c) den zusätzlichen Schritt enthält, dass für jeden Teil des Signals zwischen aufeinanderfolgenden Grauwertmaxima entschieden wird, dass er die Halbtonbildinformation enthält, falls das Ergebnis des Vergleichs in Schritt b) zwischen der gemessenen Distanz und der zuvor gemessenen Distanz innerhalb einer zweiten vorgegebenen Grenze liegt.

3. Verfahren nach Anspruch 1 oder 2, bei dem ein Grauwert-Maximum in Schritt a) nur dann identifiziert werden kann, wenn das Signal seit der Identifizierung eines unmittelbar vorausgehenden Grauwert-Maximums mindestens einmal unter einem vorgegebenen niedrigen Schwellenwert abgefallen ist.

4. Verfahren nach einem der vorstehenden Ansprüche, bei dem der vorgegebene hohe Schwellenwert variieren kann und anhand eines zuvor verarbeiteten Teils des Signals bestimmt wird, und bei dem ein neuer vorgegebener hoher Schwellenwert berechnet wird aus einem letzten niedrigsten Grauwert-Minimum plus einem vorgegebenen Prozentanteil der Differenz zwischen einem letzten höchsten Grauwert-Maximum und dem letzten niedrigsten Grauwert-Minimum.

5.  Verfahren nach einem der vorstehenden Ansprüche, bei dem der vorgegebene niedrige Schwellenwert variieren kann und anhand eines zuvor verarbeiteten Teils des Signals bestimmt wird, und bei dem ein neuer vorgegebener niedriger Schwellenwert berechnet wird aus einem letzten niedrigsten Grauwert-Minimum plus einem vorgegebenen Prozentanteil der Differenz zwischen dem letzten höchsten Grauwert-Maximum und dem letzten niedrigsten Grauwert-Minimum.

6.  Verfahren nach Anspruch 4, bei dem der neue vorgegebene hohe Schwellenwert, nachdem er berechnet wurde, mit einer vorgegebenen Geschwindigkeit reduziert wird.

7.  Verfahren nach Anspruch 5, bei dem der neue vorgegebene niedrige Schwellenwert, nachdem er berechnet wurde, mit einer vorgegebenen Geschwindigkeit erhöht wird.

8.  Verfahren nach Anspruch 6, bei dem eine vorgegebene minimale Differenz zwischen dem neuen vorgegebenen hohen Schwellenwert und dem neuen vorgegebenen niedrigen Schwellenwert aufrechterhalten wird.

9.  Verfahren nach Anspruch 7, bei dem eine vorgegebene minimale Differenz zwischen dem neuen vorgegebenen hohen Schwellenwert und dem neuen vorgegebenen niedrigen Schwellenwert aufrechterhalten wird.

10. Vorrichtung zur Erkennung von Halbtonbildinformation, die eine Raumfrequenz innerhalb vorgegebener Grenzen aufweist, bei der ein Informationsgebiet, das auch andere Arten von Bildinformation enthalten kann, mit einer Abtasteinrichtung zeilenweise abgetastet wird, um ein Signal zu erzeugen, das einem Erkennungsprozeß in einer Erkennungseinheit unterzogen wird, um für jeden Teil des Signals zu entscheiden, ob der Teil des Signals zu der Halbtonbildinformation gehört, dadurch **gekennzeichnet,** daß die Erkennungseinheit aufweist: einen Maximumdetektor, mit dem Maxima in dem Signal erfaßt werden, einen ersten Komparator, der an den Maximumdetektor angeschlossen ist und jedes erfaßte Maximum mit einem in einem ersten Speicher abgelegten hohen Schwellenwert vergleicht, einen durch Taktimpulse einer festen Frequenz gesteuerten Zähler, der bei Erfassung eines Maximums oberhalb des hohen Schwellenwertes in dem ersten Komparator den Zählerinhalt registriert, einen zweiten Komparator, der an den Zähler angeschlossen ist, um den registrierten Zählerinhalt mit einem in einem zweiten Speicher abgelegten festen Wert zu vergleichen und ein Ausgangssignal an den Ausgang der Erkennungseinheit abzugeben, falls der registrierte Inhalt des Zählers innerhalb eines vorgegebenen Bereiches um den Bezugswert liegt.

11. Vorrichtung nach Anspruch 10, bei der der registrierte Zählerinhalt in einem dritten Speicher gespeichert wird und, falls der zweite Komparator das Ausgangssignal liefert, der registrierte Zählerinhalt in einem dritten Komparator mit dem zuvor registrierten Inhalt verglichen wird, der in dem dritten Speicher gespeichert ist, wobei der dritte Komparator ein Ausgangssignal an den Ausgang der Erkennungseinheit abgibt, falls die Differenz zwischen dem registrierten Inhalt des Zählers und dem zuvor registrierten und in dem dritten Speicher gespeicherten Zählerinhalt innerhalb vorgegebener Grenzen liegt.

12. Vorrichtung nach Anspruch 10, bei der die Erkennungseinheit außerdem aufweist: einen Minimumdetektor zur Erfassung von Minima in dem Signal, einen vierten Komparator, der an den Minimumdetektor angeschlossen ist und jedes Minimum mit einem in einem vierten Speicher gespeicherten niedrigen Schwellenwert vergleicht, ein Flip-Flop, das durch den vierten Komparator und den ersten Komparator bei Auftreten eines Minimums unterhalb der Schwellenwerte aktiviert wird, wodurch das Flip-Flop in einen ersten Zustand gebracht wird, in welchem es eine Verbindung zwischen dem Eingang der Erkennungseinheit und dem Maximumdetektor herstellt, und wobei der erste Komparator das Flip-Flop bei Auftreten eines Maximums oberhalb des hohen Schwellenwertes aktiviert, wodurch das Flip-Flop in einen zweiten Zustand gebracht wird, in welchem es eine Verbindung zwischen dem Eingang der Erkennungseinheit und dem Minimumdetektor herstellt.

13. Vorrichtung nach einem der Ansprüche 10 bis 12, bei der die Erkennungseinheit weiterhin einen fünften Komparator aufweist, der an den ersten Komparator angeschlossen ist und das von dem ersten Komparator festgestellte Maximum oberhalb des hohen Schwellenwertes mit einem absoluten Maximalwert vergleicht, der in einem fünften Speicher abgelegt ist, wobei der fünfte Komparator, falls das Maximum oberhalb des hohen Schwellenwertes über dem absoluten Maximalwert liegt, das Maximum oberhalb der hohen Schwellenwerte an den fünften Speicher weiterleitet, um den dort gespeicherten absoluten Maximalwert durch einen neuen absoluten Maximalwert zu ersetzen, und außerdem den neuen absoluten Maximalwert an eine Berechnungseinheit weiterleitet, in der ein neuer hoher Schwellenwert berechnet wird, der dann in dem ersten Speicher gespeichert wird.

14. Vorrichtung nach einem der Ansprüche 10 bis 13, bei der die Erkennungseinheit weiterhin einen sechsten Komparator aufweist, der an den vierten Komparator angeschlossen ist und das von dem vierten Komparator festgestellte Minimum unterhalb des niedrigen Schwellenwertes mit einem absoluten Minimalwert vergleicht, der in einem sechsten Speicher gespeichert ist, wobei der sechste Komparator in dem Fall, daß das Minimum unter dem niedrigen Schwellenwert unterhalb des absoluten Minimalwertes liegt, das Minimum unterhalb des niedrigen Schwellenwertes an den sechsten Speicher weiterleitet, um den dort gespeicherten absoluten Minimalwert durch einen neuen absoluten Minimalwert zu ersetzen, und außerdem den neuen absoluten Minimalwert an eine zweite Berechnungseinheit weiterleitet, in der ein neuer niedriger Schwellenwert berechnet wird, der dann in dem vierten Speicher gespeichert wird.

Fig-1

Fig-2

# Fig-3

# Fig-4

EP 0 236 594 B1

# Fig-5

15